# EUROPÄISCHE PATENTSCHRIFT

(11) **EP 3 133 705 B1**
(45) Veröffentlichungstag und Bekanntmachung des Hinweises auf die Patenterteilung: **13.01.2021**
(21) Anmeldenummer: 16178772.6
(22) Anmeldetag: 11.07.2016
(51) Int. Cl.: H02B 1/30, G01J 5/00, H02B 13/025

(54) **SCHALTSCHRANKANORDNUNG FÜR DIE WÄRMEEMISSIONSÜBERWACHUNG VON IN EINEM SCHALTSCHRANK AUFGENOMMENEN KOMPONENTEN**
CONTROL CABINET ASSEMBLY FOR THE HEAT EMISSION MONITORING OF COMPONENTS IN A CONTROL CABINET
SYSTEME D'ARMOIRE ELECTRIQUE POUR LA SURVEILLANCE D'EMISSION DE CHALEUR PROVENANT DE COMPOSANTS LOGES DANS UNE ARMOIRE ELECTRIQUE

(30) Priorität: 19.08.2015 DE 102015113757
(43) Veröffentlichungstag der Anmeldung: 22.02.2017
(73) Patentinhaber: Rittal GmbH & Co. KG, 35745 Herborn (DE)
(72) Erfinder: Boehme, Siegfried, 06766 Wolfen (DE); Hain, Markus, 35684 Dillenburg (DE)
(74) Vertreter: Angerhausen, Christoph

(56) Entgegenhaltungen:
- CN-U- 202 903 365
- DE-A1-102006 011 127
- KR-B1- 101 194 021
- KR-B1- 101 417 771
- US-A1- 2010 044 567
- US-A1- 2012 170 612
- US-A1- 2014 183 361
- US-A1- 2014 219 314

## Beschreibung

Die Erfindung geht aus von einer Schaltschrankanordnung für die Wärmeemissionsüberwachung von in einem Schaltschrank aufgenommenen Komponenten mit den Merkmalen des Oberbegriffs des Anspruchs 1. Eine solche Schaltschrankanordnung ist aus der US 2010/044567 A1 bekannt. Ähnliche Anordnungen beschreiben die DE 10 2016 011 127 A1, die CN 202 903 365 U, die KR 101 417 771 B1, die US 2014/183361 A1, die US 2014/219314 A1, sowie die KR 101 194 021 B1.

Eine weitere Schaltschrankanordnung ist aus der US 2012/0170612 A1 bekannt. Bei dieser wird ein Thermosensor auf eine in dem Schaltschrankinnenraum aufgenommene und zu überwachende Komponente gerichtet, wozu der Sensor vorab auf eine Ausgangstemperatur der überwachten Komponente kalibriert wird, um im folgenden einen Temperaturanstieg der zu überwachenden Komponente zu überwachen. Der Sensor weist darüber hinaus Mittel auf, welche es erlauben, diesen auf die zu überwachende Komponente zu fokussieren. Der beschriebene Sensor eignet sich insbesondere für die Überwachung der Wärmeemission einer Stromsammelschiene innerhalb des Schaltschranks.

Die bekannte Schaltschrankanordnung hat den Nachteil, dass es bei dieser erforderlich ist, die Sensoreinheit vorab auf eine zu überwachende Komponente zu richten, von welcher angenommen wird, dass sie aufgrund eines Defektes, eines Kontaktproblems, durch Alterungseffekte in der Verdrahtung, durch Überlastung oder einen anderen ähnliche Effekt einen übermäßigen Temperaturanstieg zukünftig erfahren kann oder wird. In einem Schaltschrank ist jedoch üblicherweise eine Vielzahl Wärme abgebender Komponenten aufgenommen, welche völlig unabhängig voneinander aus den oben genannten Gründen einen Temperaturanstieg erfahren und damit zur Bildung eines Hot-Spots im Schaltschrank führen können. Um mit der aus dem Stand der Technik bekannten Schaltschrankanordnung somit sämtliche in dem Schaltschrankinnenraum aufgenommenen, hinsichtlich einer Wärmeentstehung risikobehafteten Komponenten überwachen zu können, wäre es erforderlich, eine entsprechende Vielzahl Sensoreinheiten vorzusehen, von denen jede jeweils zur Überwachung der Wärmeemission einer bestimmten Wärme abgebenden Komponente vorgesehen ist, sofern nicht bereits bekannt ist, dass nur eine bestimmte Wärme abgebende Komponente zukünftig einem der genannten Defekte unterliegen wird.

Es ist daher die Aufgabe der Erfindung, die eingangs genannte Schaltschrankanordnung derart weiterzuentwickeln, dass sie die vollständige oder annähernd vollständige Überwachung der in dem Schaltschrankinneren aufgenommenen, Wärme abgebenden Komponenten mit Hilfe einer oder weniger Sensoreinheiten erlaubt, insbesondere ohne dass für jede Wärme abgebende Komponente eine separate Sensoreinheit vorgesehen sein muss.

Diese Aufgabe wird durch eine Schaltschrankanordnung mit den Merkmalen des Anspruchs 1 gelöst. Die abhängigen Ansprüche betreffen jeweils vorteilhafte Ausführungsformen der Erfindung.

Demgemäß ist vorgesehen, dass die Sensoreinheit ein Thermopile-Array-Sensor ist. Die Sensoreinheit kann beispielsweise einen Sensor umfassen, welcher die ortsaufgelöste Abbildung eines Wärmeemissionsreferenzwertes über ein flächiges Messfeld erlaubt, das eine Vielzahl Wärme abgebender Komponenten erfasst.

Die Sensoreinheit kann auch mehrere, beispielsweise zwei wärmempfindliche Sensoren mit überlappendem Messfeld aufweisen, die stationär in dem Schaltschrank angeordnet sind. Dadurch können Messfehler durch Abschattungen wirkungsvoll vermieden werden.

Es kann weiterhin vorgesehen sein, dass die Sensoreinheit eine Regel- und Steuereinheit aufweist oder mit einer Solchen kommunikativ verbunden ist, wobei in der Regel- und Steuereinheit mindestens eine Ausgangs- oder Solltemperatur oder ein korrespondierender Wärmeemissionswert für mindestens eine Wärme abgebende Komponente hinterlegt ist. Dabei kann die Regel- und Steuereinheit darauf ausgelegt sein, ein Warnsignal auszugeben, wenn eine Mindestabweichung von der Ausgangs- oder Solltemperatur, oder von einem Wärmeemissionsausgangs- oder -sollwert festgestellt wird.

Die Sensoreinheit kann weiterhin darauf ausgelegt sein, kontinuierlich oder periodisch eine Temperatur, einen Wärmeemissionswert, oder einen korrespondierenden Messwert jeweils für mehrere Wärme abgebende Komponenten zu ermitteln.

In der Regel wird keine Eins-zu-Eins-Zuordnung zwischen den Messfeldern und den Wärme abgebenden Komponenten zu realisieren sein. Die Sensoreinheit beziehungsweise eine Steuer- und Regelungseinheit kann daher darauf ausgelegt sein, anhand ermittelter übereinstimmender oder abweichender Wärmeemissions- beziehungsweise Temperaturwerte benachbarter Messfelder zu bestimmen, ob jeweils benachbarte Messfelder derselben Wärme abgebenden Komponente zugeordnet sind, oder unterschiedlichen.

Weiterhin können mehrere Messsektoren für die Überwachung einer einzigen Wärme abgebenden Komponente zusammen gruppiert sein, um ein gegenüber einem einzelnen Messsektor größeres Messfeld für die Überwachung dieser Wärme abgebenden Komponente zu bilden.

Ein Rahmengestell des Schaltschrankes, Flachteile des Schaltschranks, eine Montageplatte innerhalb des Schaltschranks, auf der die Wärme abgebenden Komponenten angeordnet sein können, und/oder andere Bauteile im Innenraum des Schaltschranks können eine reflexionsmindernde Oberfläche, insbesondere eine reflexionsarme Lackierung, beispielsweise eine Mattlackierung, aufweisen, um Messfehler zu vermeiden.

Weiterhin kann die Sensoreinheit oder eine Regel- und Steuereinheit darauf ausgelegt sein, bei einer erfassten, lokalen Wärmeemissionsveränerung die Kühlleistung eines Klimageräts für die Kühlung des Schaltschrankinnenraums zu variieren. Dabei kann die Sensoreinheit ein Messfeld aufweisen, das in mehrere Messsektoren gleicher oder unterschiedlicher Größe unterteilt ist, wobei die Messsektoren eine Temperatur, einen Wärmeemissionswert, oder einen korrespondierenden Messwert jeweils für eine Wärme abgebende Komponente erfassen, und wobei die Regel- und Steuereinheit darauf ausgelegt ist, in Abhängigkeit der gemessenen Temperatur, des Wärmeemissionswertes oder des korrespondierenden Messwertes eines oder mehrerer Messsektoren die Kühlleistung des Kühlgeräts zu variieren. Auch hierbei können mehrere Messsektoren zusammen gruppiert sein und so das Messsignal dieser Gruppe von Sektoren für die Kühlleistungssteuerung herangezogen werden.

Weitere Einzelheiten der Erfindung werden anhand der nachstehenden Figuren erläutert. Dabei zeigt:
- Figur 1: schematisch im Querschnitt eine Schaltschrankanordnung gemäß einer Ausführungsform; und
- Figur 2: schematisch eine beispielhafte Sensoreinheit.

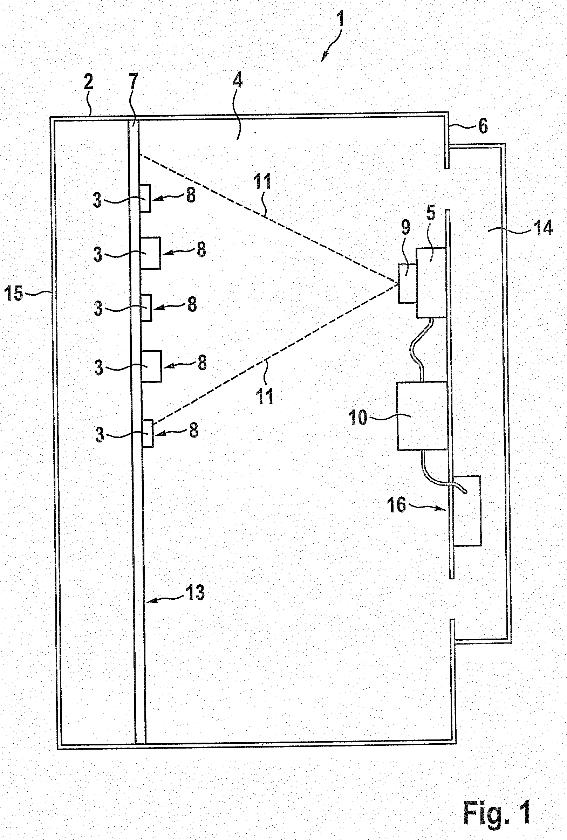

Die in Figur 1 dargestellte Schaltschrankanordnung 1 besteht im Wesentlichen aus einem Schaltschrank 2 und einem an der Schaltschranktür 6 montierten Klimagerät 14. Zwischen der Schaltschranktür 6 und der Schaltschrankrückwand 15 ist der Schaltschrankinnenraum 4 abgegrenzt. Unter einem Mindestabstand zur Rückwand 15 ist eine Montageplatte 7 im Innenraum 4 des Schaltschranks 2 angeordnet, auf der die Wärme abgebenden Komponenten übereinander und, was in der gezeigten Darstellung nicht erkennbar ist, nebeneinander angeordnet sind. An der Innenseite 16 der Schaltschranktür 6 ist eine Sensoreinheit 5 stationär montiert. Die Sensoreinheit 5 weist einen wärmeempfindlichen Sensor 9 auf. Dieser kann insbesondere als Thermophile-Array-Sensor ausgebildet sein, welcher auf die Montageplatte 7, insbesondere auf die auf dieser montierten Wärme abgebenden Komponenten 3 gerichtet ist.

Die Wärme abgebenden Komponenten 3 weisen an ihrer dem Sensor 9 zugewandten Stirnseite 8 eine Wärme abgebende Fläche auf, deren Wärmeemission von dem Sensor 9 erfasst werden kann. Durch die Strichlinien ist das Messfeld 11 des Sensors 9 angedeutet. Es ist erkennbar, dass mit Hilfe einer einzigen Sensoreinheit und insbesondere mit Hilfe eines einzigen Sensors, beispielsweise dem genannten Thermophile-Array-Sensor, ein Wärmeemissionsbild erzeugt werden kann, welches sich über eine Vielzahl Wärme abgebender Komponenten 3 erstreckt.

Die Sensoreinheit 5 ist mit einer Regel- und Steuereinheit 10 verbunden, in welcher beispielsweise ein Ausgangs- oder Sollwert für mindestens eine der Wärme abgebenden Komponenten 3 hinterlegt sein kann. Die Regel- und Steuereinheit 10 kann weiterhin darauf ausgelegt sein, im Falle einer Wärmeemissionsüberhöhung ein Warnsignal auszugeben. Weiterhin kann die Regel- und Steuereinheit 10 dazu verwendet werden, das Klimagerät 14 derart anzusteuern, so dass es seine Kühlleistung erhöht, wenn über die Sensoreinheit 5 ermittelt wird, dass zumindest eine der Wärme abgebenden Komponenten eine kritische Wärmeemissionsüberhöhung aufweist.

Der Innenraum 4 des Schaltschranks 2, insbesondere die Montageplatte 7, die dem Innenraum 4 zugewandten Seiten der Flachteile des Schaltschranks 2 sowie die Türinnenseite 16 können mit einer reflexionsmindernden Beschichtung, insbesondere einer Lackierung versehen sein, um Messfehler zu vermeiden.

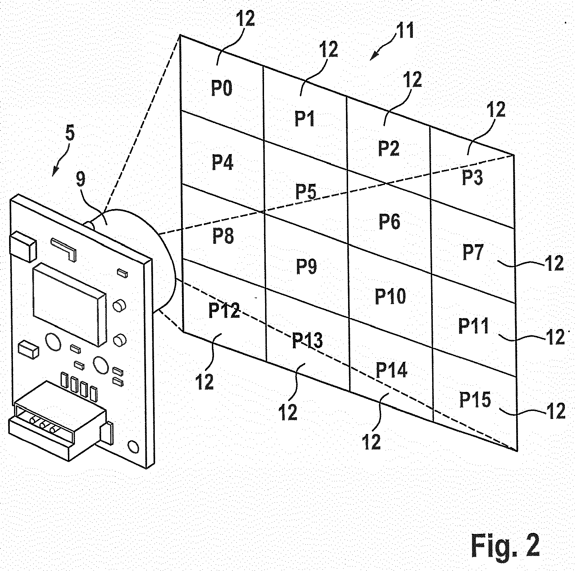

In Figur 2 ist eine beispielhafte Sensoreinheit 5 veranschaulicht. Diese weist einen Sensor 9 auf, welcher ein schachbrettartig unterteiltes Messfeld 11 mit einzelnen Messfeldern 12 aufweist. Beispielsweise kann der bereits genannte Thermophile-Array-Sensor dazu verwendet werden, um entsprechend der Unterteilung des Messfelds 11 in die Messfelder 12 aufgelöst ein Wärmeemissionsbild der Montageplatte 7 (siehe Figur 1) beziehungsweise der darauf angeordneten Wärme abgebenden Komponenten 3 zu erzeugen. Dies erlaubt die frühzeitige Erkennung von Hot-Spots über die abgetastete Fläche der Montageplatte.

### Bezugszeichenliste

- 1: Schaltschrankanordnung
- 2: Schaltschrank
- 3: Komponenten
- 4: Innenraum
- 5: Sensoreinheit
- 6: Schaltschranktür
- 7: Montageplatte
- 8: Wärme abgebende Seite
- 9: wärmeempfindlicher Sensor
- 10: Regel- und Steuereinheit
- 11: Messfeld
- 12: Messsektor
- 13: reflexionsmindernde Oberfläche
- 14: Klimagerät
- 15: Schaltschrankrückwand
- 16: Innenseite

## Patentansprüche

1. Schaltschrankanordnung (1) für die Wärmeemissionsüberwachung von in einem Schaltschrank (2) aufgenommenen Komponenten (3), wobei die Schaltschrankanordnung (1) einen Schaltschrank (2) aufweist, in dessen Innenraum (4) eine Vielzahl horizontal nebeneinander und vertikal untereinander angeordneter Wärme abgebender Komponenten (3) aufgenommen ist, und wobei zur Überwachung einer Wärmeemission der Wärme abgebenden Komponenten (3) mindestens eine Sensoreinheit (5) in dem Schaltschrank angeordnet ist, welche die Wärmeemission mehrerer oder sämtlicher Wärme abgebender Komponenten erfasst, wobei die mindestens eine Sensoreinheit (5) stationär in dem Schaltschrank (2) angeordnet ist, wobei die Sensoreinheit (5) ein Messfeld (11) aufweist, das in mehrere Messsektoren (12) gleicher oder unterschiedlicher Größe unterteilt ist, wobei die Messsektoren (12) zumindest teilweise kontinuierlich oder periodisch eine Temperatur, einen Wärmeemissionswert, oder einen korrespondierenden Messwert jeweils für eine Wärme abgebende Komponente (3) erfassen, wobei der Schaltschrank (2) eine Schaltschranktür (6) und eine in seinem Innenraum (4) angeordnete Montageplatte (7) aufweist, auf der die Wärme abgebenden Komponenten (3) zumindest mit einer Wärme abgebenden Seite (8) der Schaltschranktür (6) zugewandt angeordnet sind, wobei an einer den Wärme abgebenden Komponenten (3) zugewandten Innenseite (16) der Schaltschranktür (6) zumindest ein Sensor (9) der Sensoreinheit (5) stationär montiert ist, **dadurch gekennzeichnet, dass** die Sensoreinheit (5) ein Thermopile-Array-Sensor ist.

2. Schaltschrankanordnung (1) nach einem der vorangegangen Ansprüche, bei der die Sensoreinheit (5) mindestens zwei wärmeempfindliche Sensoren (9) mit überlappendem Messfeld aufweist, die stationär in dem Schaltschrank (2) angeordnet sind.

3. Schaltschrankanordnung (1) nach einem der vorangegangen Ansprüche, bei der die Sensoreinheit (5) eine Regel- und Steuereinheit (10) aufweist oder mit einer solchen kommunikativ verbunden ist, wobei in der Regel- und Steuereinheit (10) mindestens eine Ausgangs- oder Solltemperatur, oder ein korrespondierender Wärmeemissionswert für mindestens eine Wärme abgebende Komponente (3) hinterlegt ist.

4. Schaltschrankanordnung (1) nach Anspruch 3, bei der die Regel- und Steuereinheit (10) darauf ausgelegt ist, ein Warnsignal auszugeben, wenn eine Mindestabweichung von der Ausgangs- oder Solltemperatur oder einem Wärmeemissionsausgangs- oder - sollwert festgestellt wird.

5. Schaltschrankanordnung nach einem der vorangegangen Ansprüche, bei der die Sensoreinheit (5) darauf ausgelegt ist, kontinuierlich oder periodisch eine Temperatur, einen Wärmeemissionswert, oder einen korrespondierenden Messwert jeweils für mehrere Wärme abgebende Komponenten (3) zu ermitteln.

6. Schaltschrankanordnung nach Anspruch 1, bei der mehrere Messsektoren (12) für die Überwachung einer einzigen Wärme abgebenden Komponente (3) zusammen gruppiert sind, um ein gegenüber einem einzelnen Messsektor (12) größeres Messfeld für die Überwachung der Wärme abgebenden Komponente (3) zu bilden.

7. Schaltschrankanordnung nach einem der vorangegangen Ansprüche, bei der ein Rahmengestell des Schaltschranks (2), Flachteile des Schaltschranks (2), eine Montageplatte (7), auf der die Wärme abgebender Komponenten (3) angeordnet sind, und/oder andere Bauteile im Innenraum (4) des Schaltschranks (2) eine reflexionsmindernde Oberfläche (13), insbesondere eine reflexionsarme Lackierung aufweisen.

8. Schaltschrankanordnung nach einem der vorangegangen Ansprüche, bei der die Sensoreinheit (5) oder eine Regel- und Steuereinheit (10) darauf ausgelegt ist, bei einer erfassten, lokalen Wärmeemissionsverändernung die Kühlleistung eines Klimageräts (14) für die Kühlung des Schaltschrankinnenraums (4) zu variieren.

9. Schaltschrankanordnung nach Anspruch 8, bei der die Sensoreinheit (5) ein Messfeld (11) aufweist, das in mehrere Messsektoren (12) gleicher oder unterschiedlicher Größe unterteilt ist, wobei die Messsektoren (12) eine Temperatur, einen Wärmeemissionswert, oder einen korrespondierenden Messwert jeweils für eine Wärme abgebende Komponente (3) erfassen, und wobei die Regel- und Steuereinheit (10) darauf ausgelegt ist, in Abhängigkeit der gemessenen Temperatur, des Wärmeemissionswertes oder des korrespondierenden Messwertes eines oder mehrerer Messsektoren (12) die Kühlleistung des Kühlgeräts zu variieren.

## Claims

1. A switch cabinet arrangement (1) for monitoring the heat emission of components (3) accommodated in a switch cabinet (2), the switch cabinet arrangement (1) having a switch cabinet (2), in the interior (4) of which a plurality of heat-emitting components (3) arranged horizontally next to one another and vertically one below the other are accommodated, and wherein for monitoring a heat emission of the heat-emitting components (3) at least one sensor unit (5) is arranged in the switch cabinet, which sensor unit detects the heat emission of several or all of the heat-emitting components, wherein the at least one sensor unit (5) is arranged stationarily in the switch cabinet (2), wherein the sensor unit (5) has a measuring field (11) which is subdivided into several measuring sectors (12) of the same or different size, wherein the measuring sectors (12) at least partially continuously or periodically detect a temperature, a heat emission value, or a corresponding measured value in each case for a heat-emitting component (3), wherein the switch cabinet (2) has a switch cabinet door (6) and a mounting plate (7) arranged in its interior (4), on which the heat-emitting components (3) are arranged with at least one heat-emitting side (8) facing the switch cabinet door (6), at least one sensor (9) of the sensor unit (5) being mounted in a stationary manner on an inner side (16) of the switch cabinet door (6) facing the heat-emitting components (3), **characterized in that** the sensor unit (5) is a thermopile array sensor.

2. The switch cabinet arrangement (1) according to one of the preceding claims, in which the sensor unit (5) has at least two heat-sensitive sensors (9) with overlapping measuring field, which are arranged stationarily in the switch cabinet (2).

3. The switch cabinet arrangement (1) in accordance with one of the preceding claims, in which the sensor unit (5) has a regulating and control unit (10) or is communicatively connected to such a regulating and control unit (10), wherein at least one starting or desired temperature, or a corresponding heat emission value for at least one heat-emitting component (3) is stored in the regulating and control unit (10).

4. The switch cabinet arrangement (1) according to claim 3, in which the regulating and control unit (10) is designed to issue a warning signal if a minimum deviation from the starting or desired temperature or a heat emission starting or setpoint value is detected.

5. The switch cabinet arrangement according to one of the preceding claims, in which the sensor unit (5) is designed to continuously or periodically determine a temperature, a heat emission value, or a corresponding measured value for each of several heat-emitting components (3).

6. The switch cabinet arrangement according to claim 1, in which several measuring sectors (12) for monitoring a single heat-emitting component (3) are grouped together in order to form a larger measuring field for monitoring the heat-emitting component (3) compared to a single measuring sector (12).

7. The switch cabinet arrangement according to one of the preceding claims, in which a frame of the switch cabinet (2), flat parts of the switch cabinet (2), a mounting plate (7) on which the heat-emitting components (3) are arranged, and/or other components in the interior (4) of the switch cabinet (2) have a reflection-reducing surface (13), in particular a low-reflection paint coating.

8. The switch cabinet arrangement according to one of the preceding claims, in which the sensor unit (5) or a regulating and control unit (10) is designed to vary the cooling capacity of an air conditioning unit (14) for cooling the interior (4) of the switch cabinet in the event of a detected local change in heat emission.

9. The switchgear cabinet arrangement according to claim 8, in which the sensor unit (5) has a measuring field (11) which is subdivided into a plurality of measuring sectors (12) of equal or different size, wherein the measuring sectors (12) detect a temperature, a heat emission value or a corresponding measured value in each case for a heat-emitting component (3), and wherein the regulating and control unit (10) is designed to vary the cooling capacity of the cooling device as a function of the measured temperature, the heat emission value or the corresponding measured value of one or more measuring sectors (12).

## Revendications

1. Disposition d'armoire de commande (1) pour la surveillance des émissions thermiques des composants (3) logés dans une armoire de commande (2), dans laquelle la disposition d'armoire de commande (1) comprend une armoire de commande (2) dans l'espace interne (4) de laquelle sont logés une pluralité de composants dégageant de la chaleur (3), disposés horizontalement de manière juxtaposée et verticalement de manière superposée et dans laquelle, pour la surveillance d'une émission thermique des composants dégageant de la chaleur (3), au moins une unité de capteur (5) est disposée dans l'armoire de commande, qui mesure l'émission thermique de plusieurs ou de tous les composants dégageant de la chaleur, dans laquelle l'au moins une unité de capteur (5) est disposée de manière stationnaire dans l'armoire de commande (2), dans laquelle l'unité de capteur (5) comprend un champ de mesure (11) qui est divisé en plusieurs secteurs de mesure (12) de même taille ou de tailles différentes, dans laquelle les secteurs de mesure (12) mesurent au moins partiellement, de manière continue ou périodique, une température, une valeur d'émission thermique ou une valeur de mesure correspondante, respectivement pour un composant dégageant de la chaleur (3), dans laquelle l'armoire de commande (2) comprend une porte d'armoire de commande (6) et une plaque de montage (7) disposée dans son espace interne (4), sur laquelle les composants dégageant de la chaleur (3) sont disposés, avec au moins un côté dégageant de la chaleur (8) orienté vers la porte de l'armoire de commande (6), dans laquelle, sur un côté interne (16), orienté vers les composants dégageant de la chaleur (3), de le la porte de l'armoire de commande (6), est monté, de manière stationnaire, au moins un capteur (9) de l'unité de capteur (5), **caractérisée en ce que** l'unité de capteur (5) est un capteur à matrice de type thermopile.

2. Disposition d'armoire de commande (1) selon l'une des revendications précédentes, dans laquelle l'unité de capteur (5) comprend au moins deux capteurs thermosensibles (9) avec des champs de mesure qui se chevauchent, qui sont disposés de manière stationnaire dans l'armoire de commande (2).

3. Disposition d'armoire de commande (1) selon l'une des revendications précédentes, dans laquelle l'unité de capteur (5) comprend une unité de régulation et de contrôle (10) ou est reliée avec celle-ci de manière communicative, dans laquelle, dans l'unité de régulation et de contrôle (10), est enregistrée au moins une température de départ ou de consigne ou une valeur d'émission thermique correspondante pour au moins un composant dégageant de la chaleur (3).

4. Disposition d'armoire de commande (1) selon la revendication 3, dans laquelle l'unité de régulation et de contrôle (10) est conçue pour émettre un signal d'avertissement lorsqu'un écart minimal de la température de départ ou de consigne ou une valeur d'émission thermique de départ ou de consigne est constaté.

5. Disposition d'armoire de commande (1) selon l'une des revendications précédentes, dans laquelle l'unité de capteur (5) est conçue pour déterminer, de manière continue ou périodique, une température, une valeur d'émission thermique ou une valeur de mesure correspondante respectivement plusieurs composants dégageant de la chaleur (3).

6. Disposition d'armoire de commande (1) selon la revendication 1, dans laquelle plusieurs secteurs de mesure (12) sont regroupés pour la surveillance d'un seul composant dégageant de la chaleur (3), afin de former un champ de mesure plus important par rapport à un seul secteur de mesure (12) pour la surveillance du composant dégageant de la chaleur (3).

7. Disposition d'armoire de commande (1) selon l'une des revendications précédentes, dans laquelle un châssis de l'armoire de commande (2), des parties plates de l'armoire de commande (2), une plaque de montage (7) sur laquelle sont disposés les composants dégageant de la chaleur (3) et/ou d'autres composants dans l'espace interne (4) de l'armoire de commande (2), présentent une surface minimisant les reflets (13), plus particulièrement une peinture anti-reflets.

8. Disposition d'armoire de commande (1) selon l'une des revendications précédentes, dans laquelle l'unité de capteur (5) ou l'unité de régulation et de contrôle (10) est conçue pour faire varier la puissance de refroidissement d'un appareil de climatisation (14) pour le refroidissement de l'espace interne de l'armoire de commande (4) lors d'une modification d'une émission thermique locale mesurée.

9. Disposition d'armoire de commande (1) selon la revendication 8, dans laquelle l'unité de capteur (5) présente un champ de mesure (11) qui est divisé en plusieurs secteurs de mesure (12) de même taille ou de tailles différentes, dans laquelle les secteurs de mesure (12) mesurent une température, une valeur d'émission thermique ou une valeur de mesure correspondante respectivement pour un composant dégageant de la chaleur (3) et dans laquelle l'unité de régulation et de contrôle (10) est conçue pour faire varier la puissance de refroidissement de l'appareil de climatisation en fonction de la température, de la valeur d'émission thermique ou de la valeur de mesure correspondante mesurée d'un ou plusieurs secteurs de mesure (12).
